**Europäisches Patentamt**

**European Patent Office**

**Office européen des brevets**

(11) Veröffentlichungsnummer: **0 062 895**

**A1**

## (12) EUROPÄISCHE PATENTANMELDUNG

(21) Anmeldenummer: **82102995.6**

(22) Anmeldetag: **07.04.82**

(51) Int. Cl.³: **A 23 F 5/26**
**A 23 F 5/14**

(30) Priorität: **10.04.81 DE 3114685**

(43) Veröffentlichungstag der Anmeldung:
**20.10.82 Patentblatt 82/42**

(84) Benannte Vertragsstaaten:
**IT**

(71) Anmelder: **Ewert, Wolfgang**
**Ostlandstrasse 5**
**D-2161 Helmste(DE)**

(72) Erfinder: **Ewert, Wolfgang**
**Ostlandstrasse 5**
**D-2161 Helmste(DE)**

(74) Vertreter: **Vogeser, Werner, Dipl.-Ing. et al,**
**Patentanwälte Hansmann & Vogeser**
**Albert-Rosshaupter-Strasse 65**
**D-8000 München 70(DE)**

(54) Verfahren zur Herstellung von Schnellbereitungskaffee.

(57) Die Erfindung betrifft ein Verfahren zur Herstellung von Schnellbereitungskaffee, insbesondere Beutelaufgußkaffee, bei dem eine wasserlösliche Extraktschicht von Aroma- und Geschmacksstoffen auf Röstkaffeeteilchen aufgebracht wird, bei dem es ermöglicht wird, einen für Aufgußbeutel geeigneten, vollaromatischen Schnellbereitungskaffee herzustellen, der aus reinem Bohnenkaffee besteht, indem die Aroma- und Geschmacksstoffe aus dem Kern der Röstkaffeeteilchen selbst extrahiert und auf deren Außenhülle umgelagert werden.

Croydon Printing Company Ltd.

Verfahren zur Herstellung von Schnellbereitungskaffee

Die Erfindung betrifft ein Verfahren entsprechend dem Oberbegriff des Anspruchs 1.

Ein derartiges Verfahren ist aus der DE-OS 28 11 353 bekannt. Bei diesem Verfahren wird übliches Kaffeekonzentrat, das durch Getriertrocknung erhalten wird, auf hierzu gesondert gemahlenen und gerösteten Röstkaffeeteilchen aufgebracht. Das nach diesem Verfahren gewonnene Produkt ist kein "reiner Bohnenkaffee", da Kaffeekonzentrat und Röstkaffeeteilchen unabhängig voneinander behandelt und auch aus unterschiedlichen Kaffeesorten stammen können.

Aus der DE-OS 21 48 626 und der CH-PS 28 68 43 sind Verfahren bekannt, nach denen entweder unmittelbar trinkbarer Kaffee oder nur ein Kaffee-Extrakt bzw. -konzentrat hergestellt werden kann, das dann entsprechend dem Verfahren nach der DE-OS 28 11 353 auf Röstkaffeeteilchen aufgebracht wird, die keinem Extrahierverfahren unterworfen wurden.

Der Erfindung liegt die Aufgabe zugrunde, ein Verfahren zu schaffen, mit dem es ermöglicht wird, einen für Aufgußbeutel geeigneten, vollaromatischen Schnellbereitungskaffee herzustellen, der aus reinem Bohnenkaffee besteht.

Gelöst wird diese Aufgabe gemäß der Erfindung durch die im kennzeichnenden Teil des Anspruchs 1 angegebenen Merkmale. Zweckmäßige Ausgestaltungen der Erfindung ergeben sich aus den Unteransprüchen.

Bei dem erfindungsgemäßen Verfahren wird nicht ein chargenfremd gewonnenes Kaffeekonzentrat, sondern aus den wieder verwendeten Röstkaffeeteilchen gewonnenes Konzentrat, also ein Eigenextrakt, auf diese Röstkaffeeteilchen aufgebracht. Die Kaffeeinhaltsstoffe sind also vor und nach dem Umlagerungsprozeß die selben, da nur eine physikalische Veränderung vorgenommen wird, die Summe aller Inhaltsstoffe aber gleichgeblieben ist.

Für die Größe der Röstkaffeeteilchen sind zwei Kriterien bestimmend:

1. die Teilchen müssen zum überwiegenden Anteil groß genug sein, um im Falle eines Beutelaufgußkaffees nicht durch den Filterbeutel zu gelangen, und

2. eine ausreichend große Oberfläche für die Extraktion haben, den die Oberflächengröße ist

   a) für die Extraktion bei der Herstellung wichtig, und

   b) nach dem üblicherweise angewandten Gefriertrocknen haben die Teilchen sich wieder zu größeren Partikeln zusammengeschlossen und müssen wieder gebrochen werden; dieser Zerkleinerungsvorgang ist auch notwendig, da allzu große Agglomeratteilchen den späteren
Verpackungsvorgang stören könnten.

Beim erneuten Zerkleinern der großen Agglomeratteilchen,
die sich beim Gefriertrocknen gebildet haben, entstehen
auf der Außenhülle der Röstkaffeeteilchen unbeschichtete
Stellen; dies ist jedoch nicht von Nachteil, da das Aufbringen der Aroma- und Geschmacksstoffschicht nicht
bedeutet, daß nicht dennoch weitere Aroma- und Geschmacksstoffe beim Zubereiten des Kaffees aus den Röstkaffeeteichen extrahiert werden können, wofür sich gerade diese
freien Stellen eignen.

Bei der praktischen Durchführung des Verfahrens wird zunächst nur Wasser mit frisch gemahlenem Kaffee erhitzt.
Man geht dabei so vor, daß zuerst das Wasser bis zum
Siedepunkt erhitzt wird, und danach der Kaffee zugesetzt
wird. Der Extrakt bildet sich erst bei diesem Vorgang,
bei dem die Aroma- und Geschmacksstoffe gelöst werden.
Durch Gefriertrocknen werden nun diese Stoffe an der
Außenhülle der Röstkaffeeteilchen angelagert, so daß also
eine Umlagerung stattfindet.

Die Röstkaffeeteilchen erfüllen bei dem erfindungsgemäßen
Verfahren zwei Funktionen, sie dienen nämlich als Träger
der sofort löslichen Aroma- und Geschmacksstoffschicht
auf der Außenhülle der Röstkaffeeteilchen und enthalten
zusätzlich Geschmacksstoffe, die beim Zubereiten des
Kaffees z.B. in einer Tasse extrahiert werden.

Die Erfindung ist nachfolgend anhand eines Verfahrensbeispiels näher erläutert.

Bei dem Verfahren nach der vorliegenden Erfindung
werden als Ausgangsprodukt frisch geröstete Kaffeebohnen verwendet, welche vorteilhafterweise aus geeigneten Mischungen bestehen können. Die Kaffeebohnen werden zunächst bis zu einer erwünschten Körnung vermahlen, die für den späteren Produktionsverlauf geeignet ist; hierbei wird z.B. mit einer gekühlten Walzenmühle gearbeitet, wobei der Prozeß vorzugsweise unter weitgehendem Sauerstoffausschluß durchgeführt wird, z.B. in $CO_2$-Gegenwart.

Die eigentliche "Extraktion" der frisch gemahlenen Kaffeeteilchen findet zweckmäßigerweise in einem Druckbehälter aus geschmacksneutralem Material statt (z.B. aus $V_4$A-Stahl). In diesem Druckbehälter wird eine erforderliche Trinkwassermenge erhitzt, wobei sich die Wassermenge nach der späteren Weiterverarbeitung richtet, d.h., es wird möglichst wenig Wasser eingesetzt, da das Wasser später durch Gefriertrocknung wieder entzogen werden muß. Bei der Beigabe des Wassers ist andererseits darauf zu achten, daß der Transport des "Kaffeebreies" durch Schneckenförderer und dergleichen ermöglicht sein soll. Außerdem ist für die eigentliche Extraktion eine bestimmte Menge erforderlich. Bei der Beigabe des Wassers spielt die Qualität desselben eine große Rolle für den Geschmack des erwünschten Fertigproduktes. Das Wasser darf nicht merkbar alkalisch sein, weil sonst die Farbe der Röstprodukte beeinträchtigt wird. Auch ist auf einen möglichst niedrigen Härtegrad des Wassers zu achten, da sich bei einem hohen Härtegrad Rückstände bei der späteren Gefriertrocknung auf dem Kaffee absetzen und dort bis zur Zubereitung beim Verbraucher verbleiben. Dies kann zu einer Beeinträchtigung des Geschmacks führen.

Hat das Wasser ausreichender Menge den Siedepunkt im Druckbehälter erreicht, dann wartet man so lange, bis der Luftsauerstoff durch den Wasserdampf weitgehend verdrängt ist. Nachfolgend wird das aus den gemahlenen Kaffeeteilchen bestehende Kaffeemehl in den Druckbehälter eingefüllt. Nach dem Verschließen des Behälters ist es zweckmäßig, die angesetzte Masse langsam zu rühren. Um dabei die wasserlöslichen Bestandteile aus dem gemahlenen Röstkaffee möglichst vollständig herauszulösen, wird weitergeheizt, wobei nach einem Verfahrensbeispiel bei einer Temperatur von ca.120°C ein Druck von ca. 0,8 - 0,9 bar besteht. Unter diesen Arbeitsbedingungen wird 20 - 30 Minuten weitergerührt, bis eine erwünschte Extraktmenge zwischen 25% und 28% erreicht ist. Da die Erhitzung in einem geschlossenen System erfolgt, gehen hierbei keine Aromastoffe verloren. Durch gleichzeitiges Kühlen der Oberseite des Druckbehälters werden die flüchtigen Aromastoffe kondensiert und wieder in die flüssige Phase zurückgeführt. Der "Kaffeebrei" aus wasserlöslichen Kaffeebestandteilen im Gemisch mit unlöslichen Bestandteilen wird nach dem vorgenannten Verfahrensschritt auf ca. 15°C abgekühlt. In der wässrigen Phase sind nunmehr die Aroma- und Geschmacksstoffe weitgehend angereichert. In dem gekühlten "Kaffeebrei" liegen die wasserlöslichen Aroma- und Geschmacksstoffe sowie die noch im Kaffeeöl gelösten vor. Die Besonderheit der vorbeschriebenen Wasserbehandlung unter Druckeinwirkung liegt darin, daß aus Röstkaffeemehl bzw. -pulver unter Einwirkung von Wasser erst diejenigen Stoffe abgespalten werden können, die für das Getränk Bedeutung haben. Es sind dies insbesondere veränderte Chlorogensäuren, möglicherweise Styrolderivate.

Das abgekühlte feste/flüssige Gemisch wird nun der sogenannten Gefriertrocknung zugeführt: Der Trocknungsprozeß wird nach bekannten Verfahren durchgeführt, so z.B. bei -40°C und unter Vakuum. Hierbei lagern sich die Aroma- und Geschmacksstoffe auf den ursprünglich vorhandenen Kaffeeteilchen ab und bilden die umgebende Hülle. Das dadurch gewonnene Kaffeeagglomerat setzt sich aus sehr feinen bis sehr groben Teilen zusammen. Um Geschmacksveränderungen zu erreichen, kann dieses Agglomerat mit unbehandeltem Kaffee vermahlen werden. Ein Zusatz von unbehandeltem, frischen Röstkaffee ist im allgemeinen nötig, um bestimmte Geschmacksrichtungen herauszustellen, weil durch die Extraktion die Sorteneigenschaften abgeflacht werden können. Der Anteil an frischem Röstkaffee variiert, er liegt aber im allgemeinen zwischen 10 & 15%. Nach der Zugabe wird ein Vermahlen des Produktes, bestehend aus Kaffeeagglomerat und frischem Röstkaffee, vorgenommen, vorzugsweise direkt nach der Gefriertrocknung, da die tiefe Temperatur das Mahlen erleichtert und zudem einen weiteren Aromaschutz leistet. Außerdem wird hierbei auf vorteilhafte Weise der auftretenden Erwärmung durch das Mahlen entgegengewirkt. Nach diesem Mahlprozeß ist das Fertigprodukt gegeben und verpackungsfertig; zur Vermeidung von unerwünschten Geschmacksveränderungen sollte es jedoch weiterhin unter Inertgas eingelagert werden.

Für den Endverbrauch wird das Produkt in Aufgußbeutel gefüllt (ca. 7 - 8 g pro Tasse). Derartige Aufgußbeutel sollten aus Japanseide bestehen, da dieses Material die besten Ergebnisse liefert und zudem völlig geschmacksneutral ist. Zur besseren Handhabung des Aufgußbeutels ist es notwendig, einen Faden anzubringen. Dieser Beutel wird seinerseits in einen Alufolien-Beutel eingebracht, der unter Vakuum verschweißt wird. Hierdurch ist ein Aromaschutz über eine Zeitdauer von mindestens sechs Monaten gegeben. Wird die Lagerung bei tiefen Temperaturen vorgenommen, dann kann sich die Haltbarkeit unter Umständen verdoppeln.

Patentansprüche

1. Verfahren zur Herstellung von Schnellbereitungskaffee, insbesondere Beutelaufgußkaffee, bei dem eine wasserlösliche Extraktschicht von Aroma- und Geschmacksstoffen auf Röstkaffeeteilchen aufgebracht wird, d a d u r c h   g e k e n n z e i c h n e t , daß die Aroma- und Geschmacksstoffe aus dem Kern der Röstkaffeeteilchen selbst extrahiert und auf deren Außenhülle umgelagert werden.

2. Verfahren nach Anspruch 1, d a d u r c h   g e - k e n n z e i c h n e t ,  daß die frischgemahlenen Kaffeeteilchen mit Wasser in Form eines Kaffeebreies vermengt werden, wonach der Kaffeebrei in einem Druckbehälter erhitzt und nachfolgend gekühlt wird, und daß anschließend zum Zwecke der Anlagerung der Aroma- und Geschmacksstoffe eine Gefriertrocknung des gekühlten Fest-Flüssig-Gemisches durchgeführt wird.

3. Verfahren nach Anspruch 2, d a d u r c h   g e - k e n n z e i c h n e t ,  daß das Wasser zunächst bis zum Siedepunkt erhitzt und danach die Röstkaffeeteilchen zugesetzt werden.

4.      Verfahren nach Anspruch 2 oder 3, d a d u r c h g e k e n n z e i c h n e t , daß die nach dem Gefriertrocknen agglomerierten Teilchen zermahlen werden.

5.      Verfahren nach Anspruch 4, d a d u r c h g e - k e n n z e i c h n e t , daß die agglomerierten Teilchen zusammen mit unbehandeltem frischen Röstkaffee vermahlen werden.

6.      Verfahren nach einem der Ansprüche 2 bis 5, d a d u r c h g e k e n n z e i c h n e t , daß die Erhitzung im Druckbehälter bei einer Temperatur von bis zu 120°C bei ständigem Rühren vorgenommen wird, bis eine Extraktmenge zwischen 25 und 28% erreicht ist, und daß die nachfolgende Abkühlung auf 15°C vorgenommen wird.

7.      Verfahren nach einem der Ansprüche 2 bis 6, d a d u r c h g e k e n n z e i c h n e t , daß die Gefriertrocknung bei -40°C unter Vakuum vorgenommen wird.

**Europäisches Patentamt**

# EUROPÄISCHER RECHERCHENBERICHT

EP 82 10 2995

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-2 224 942 (M. WEISMAN) <br> * Anspruch 1 * <br><br> --- | 1 | A 23 F 5/26 <br> A 23 F 5/14 |
| X | FR-A-1 244 137 (KAFFEE-IMPORT GESELLSCHAFT) <br> * Zusammenfassung 1,2; Seite 2, Spalte 2, Zeilen 6-26 * <br><br> ----- | 1 | |

|  |
|---|
| RECHERCHIERTE SACHGEBIETE (Int. Cl. ³) |
| A 23 F 5/00 |

Der vorliegende Recherchenbericht wurde für alle Patentansprüche erstellt.

| Recherchenort <br> DEN HAAG | Abschlußdatum der Recherche <br> 12-07-1982 | Prüfer <br> DESMEDT G.R.A. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82